# EUROPEAN PATENT SPECIFICATION

(11) **EP 0 476 907 B1**
(45) Date of publication and mention of the grant of the patent: **29.11.1995**
(21) Application number: 91308244.2
(22) Date of filing: 10.09.1991
(51) Int. Cl.: H04N 3/15, H04N 5/238

(54) **Solid-state imaging devices**
Festkörper-Bildaufnahmevorrichtungen
Dispositifs de prises de vues à l'état solide

(30) Priority: 11.09.1990 JP 238930/90
(43) Date of publication of application: 25.03.1992
(73) Proprietor: SONY CORPORATION, Tokyo 141 (JP)
(72) Inventor: Nakajima, Takatsugu, c/o Patents Division, Shinagawa-ku, Tokyo 141 (JP); Kokubo, Yuji, c/o Patents Division, Shinagawa-ku, Tokyo 141 (JP)
(74) Representative: Harris, Ian Richard

(56) References cited:
- EP-A- 0 296 682
- GB-A- 2 160 060
- US-A- 5 040 070

## Description

This invention relates to solid-state imaging devices.

In a video camera, for example, there is known as a mechanism for automatically adjusting the amount of light received by a charge coupled device (CCD) image sensor, a mechanism for automatically adjusting an iris in a lens part of the camera, referred to hereinafter as an auto-iris mechanism, as disclosed in, for example, Japanese patent publication kokai JP-A-6382067.

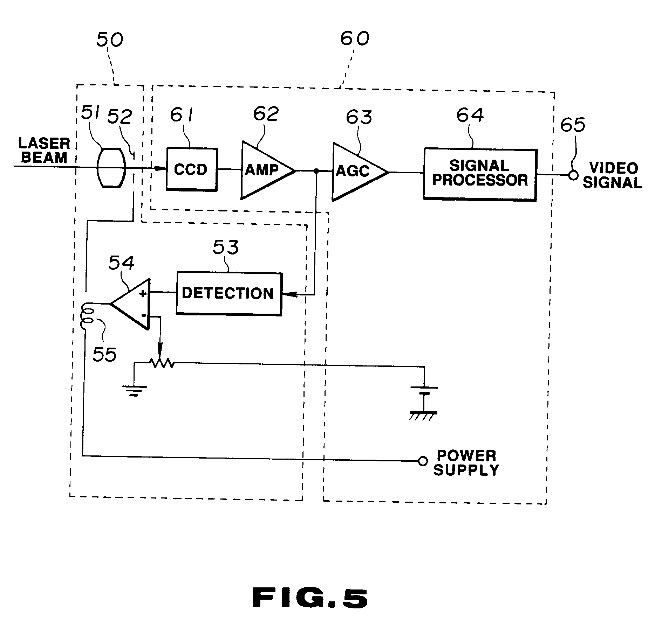

Referring to Figure 5, a video camera 60 comprises a lens part 50 and a main body. The lens part 50 comprises a lens 51, an iris 52, a detection circuit 53 for detecting the level of imaging signals transmitted from the main body of the video camera 60, a comparator circuit 54 for comparing an output of the detection circuit 53 with a reference voltage, and an iris driving circuit 55 for controlling the opening and closing of the iris 52 based on an output of the comparator circuit 54.

The main body of the video camera 60 comprises a CCD image sensor 61, made up of solid-state imaging devices, an amplifier 62 for amplifying imaging signals from the image sensor 61, an automatic gain control (AGC) circuit 63 for processing the amplified imaging signals from the amplifier 62 with AGC, and a signal processing circuit 64 for converting the imaging signals from the AGC circuit 63 into video signals conforming to the NTSC or PAL system.

The auto-iris mechanism is so constructed that an output level of the image sensor 61 is fed back to the iris 52 accommodated in the lens part 50.

That is, the opening and closing of the iris 52 is adjusted automatically so that an output level of the image sensor 61, obtained by means of the amplifier 62 and the detection circuit 53, will be the reference voltage, or so that the output of the comparator circuit 54 will be equal to zero.

On the other hand, as a light exposure adjustment mechanism not making use of an iris, there is also known a mechanism in which the charge accumulation time of a so-called charge accumulating type CCD image sensor is controlled. This is referred to hereinafter as an electronic shutter.

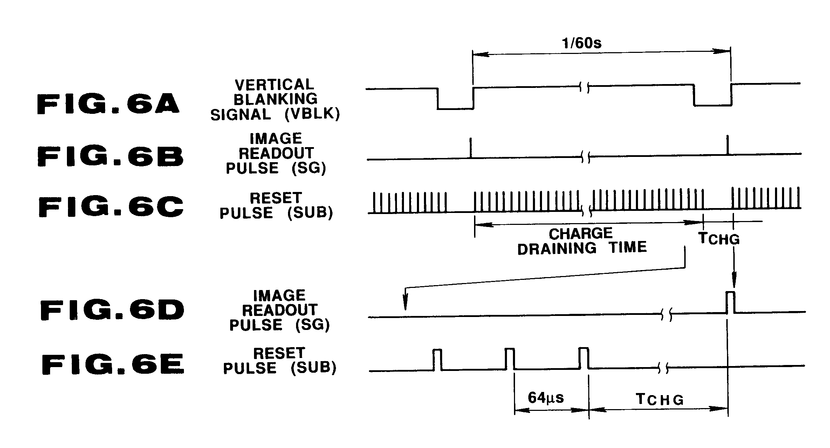

More specifically, with a field accumulation type CCD image sensor having the function of an electronic shutter, an image read-out high-level pulse SG shown at B in Figure 6 is supplied when a low level signal indicating a vertical blanking period as shown at A in Figure 6, referred to hereinafter as a vertical blanking signal, is supplied, and charges accumulated since the image read-out pulse SG for a given field until supply of the image read-out pulse for the next field are read out on the basis of the image read-out pulse SG of the next field.

Concerning the function of the electronic shutter, high-level reset pulses SUB are supplied to a substrate of the CCD image sensor during the horizontal scanning period since the image read-out pulse SG of a given field, as shown at C in Figure 6, to drain off the charges accumulated until then, and the time period since the last reset pulse SUB until the image read-out pulse SG of the next field is controlled to control the charge accumulating time T_{CHG}. In the NTSC system, for example, the maximum charge accumulating time T_{CHG}, is 16.7 ms as determined by the field frequency, whereas, in the PAL system, the maximum charge accumulating time T_{CHG} is 20 ms as determined by the field frequency.

EP-A-0 296 682 describes an imaging apparatus having an imaging device for accumulating charge, which accumulated charge is discharged in response to discharge pulses, and a shutter speed control circuit for controlling a shutter speed of said imaging device, said shutter speed control circuit comprising:
means for generating a timing pulse by comparing a voltage level dependent on an output image signal of said imaging device with a sawtooth pulse generated in response to a vertical scanning timing signal.

In an industrial video camera, for example, a number of interchangeable lenses of the so-called C-mount system are used, such that the main body of the video camera may be used in combination with freely selected lenses. However, with an auto iris lens system making use of the above-mentioned auto iris mechanism, various problems occur in connection with interfacing between the lens system and the main body of the video camera. These problems include that associated with interchangeability of a connector interconnecting the auto iris lens system and the main body of the video camera, and that associated with the matching of the standards for the feedback signal level, current capacity and the source voltage supplied from the main body of the camera to the auto iris lens system.

Also, since the detection circuit 53, the comparator circuit 54, etc. are accommodated in the lens part 50, as shown in Figure 5, it is necessary to adjust the reference voltage, etc. in the lens part 50 each time the lens part 50 is interchanged, to provide for optimum light exposure.

On the other hand, the auto iris lens system is generally expensive and involves complicated cable connections as compared with a manual iris lens system in which the iris is adjusted manually.

In addition, in the adjustment of the exposure time making use of the above electronic shutter, the reset pulses SUB draining the accumulated charges need to be applied during the horizontal blanking period to prevent any adverse effects on the currently read out imaging signals. For this reason, the charge accumulating time T_{CHG} is controlled with a 1H time period, that is, 64 »s, corresponding to a period of the horizontal scanning period, as a unit. Therefore, while no problem occurs in the step-by-step control of the charge accumulating time T_{CHG} for a lower shutter speed range corresponding to a dark object, the width of the step-by-step control becomes too coarse for practical use for a higher shutter speed range corresponding to a bright object.

According to the present invention there is provided an imaging apparatus having an imaging device for accumulating charge, which accumulated charge is discharged in response to discharge pulses, and a shutter speed control circuit for controlling a shutter speed of said imaging device, said shutter speed control circuit comprising:
means for generating a timing pulse by comparing a voltage level dependent on an output image signal of said imaging device with a sawtooth pulse generated in response to a vertical scanning timing signal, characterised by:
means for generating discharge pulses in response to a reset pulses associated with horizontal scanning timing signals, a vertical blanking pulse and said timing pulse, so that discharge timings for said imaging device are controlled by each reset pulse discretely up to a last reset pulse when said timing pulse ends outside a blanking period of said vertical blanking pulse, and is controlled in a continuous manner where said timing pulse extends within said blanking period of said vertical blanking pulse.

Embodiments of the present invention can provide a solid state imaging apparatus in which automatic light exposure adjustment can be achieved by an inexpensive manual iris lens, and in which connection between the lens system and the main body of the video camera may be dispensed with.

According to the present invention there is provided a solid-state imaging apparatus comprising a solid-state imaging device, the charge accumulation time of which may be controlled by controlling the draining timing of accumulated charges, level detection means for detecting an output level of said imaging device, and control means for controlling the charge accumulation time of said imaging device on the basis of an output of said level detection means, wherein, when the last draining timing of the accumulated charges in said imaging device is within an imaging period, said control means controls the charge accumulation time of said imaging device with the time corresponding to one period of a horizontal synchronizing signal as a unit, and, when the last draining timing of the accumulated charges in said imaging device is within the vertical blanking period, said control means controls the charge accumulation time in said imaging device continuously.

With such an imaging apparatus, when the object is dark and the last draining timing of the accumulated charges of the imaging device is comprised within the image period, the charge accumulating time for the imaging device is controlled with the 1H period as a unit for outputting the charges accumulated in the imaging device. When the object is light and the last draining timing of the accumulated charges is comprised within the vertical blanking period, the charge accumulating timing of the imaging device is controlled continuously for outputting the charges accumulated in the imaging device.

The charge accumulation time may be adjusted finely and continuously in the high shutter speed range in which adjustment of the charge accumulation time on the 1H basis is not practicable, so that effects comparable to those of opening or closing the iris may be produced. In other words, the function of automatic light exposure adjustment may be realized using an inexpensive manual iris lens, while cable connection between the main body of the video camera and the lens unit can be eliminated. Since optimum light exposure may be preset on the main body of the video camera, re-adjustment of light exposure need not be performed each time the lens is interchanged.

The invention will now be described by way of example with reference to the accompanying drawings, throughout which like parts are referred to by like references, and in which:
Figure 1 is a block circuit diagram of a video camera with a solid-state imaging apparatus according to a first embodiment of the present invention;
Figure 2 is a schematic view showing a shutter speed control circuit of the camera of Figure 1;
Figure 3 is a timing chart of various signals in the control circuit of Figure 2;
Figure 4 is a block circuit diagram of a video camera with a solid-state imaging apparatus according to a second embodiment of the present invention;
Figure 5 is a block circuit diagram of a known video camera; and
Figure 6 is a timing chart of various signals for illustrating the control of the charge accumulation time of a known CCD image sensor.

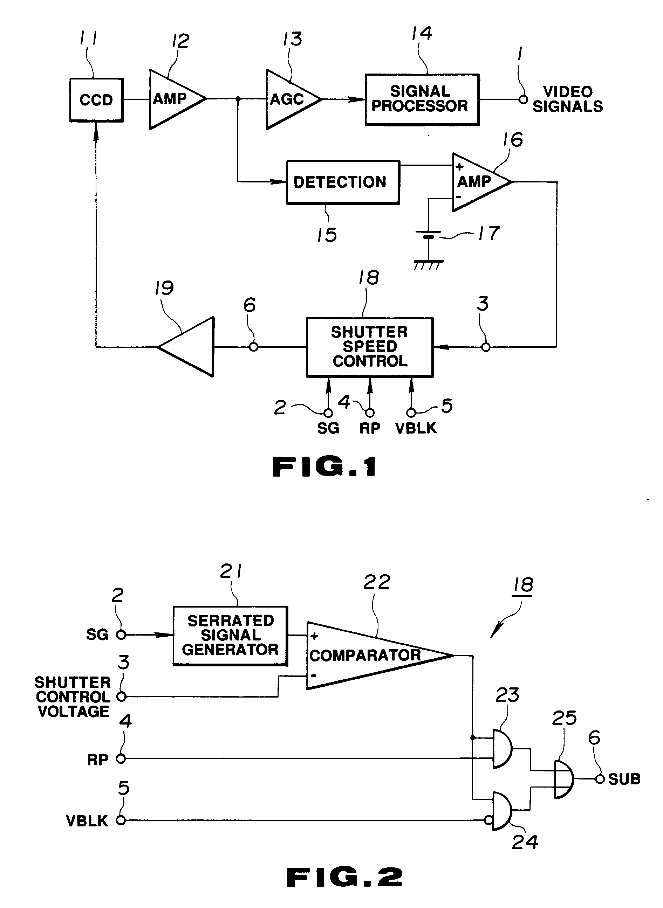

Referring to Figure 1, the video camera includes a solid-state imaging device 11 having a controllable charge accumulation time, a signal processing circuit 14 for converting the imaging signals from the solid-state imaging device 11 into video signals conforming to, for example, the NTSC system or the PAL system, a detection circuit 15 for detecting an output level of the solid-state imaging device 11, and a shutter speed control circuit 18 for controlling the charge accumulation time in the imaging device 11 based on an output from the detection circuit 15.

As the imaging device 11, a so-called field accumulation type CCD image sensor is used, which is made up of a matrix array of photoelectric converting elements, and in which the charges accumulated in these converting elements are read out using charge-coupled devices. The imaging device 11 is designed so that a high level pulse is supplied to the substrate during a horizontal blanking period to drain the accumulated charges, and so that the charge accumulation time may be controlled externally. That is, a CCD image sensor having the function of a so-called electronic shutter is used as the imaging device 11. The imaging signals from the imaging device 11 are amplified by an amplifier 12 and thence supplied to an AGC circuit 13. The imaging signals from the AGC circuit 13 are transmitted to the signal processing circuit 14 so as to be converted into image signals conforming to, for example, the NTSC or PAL system. These image signals are outputted at an output terminal 1.

The detection circuit 15 detects an output level of the imaging device 11 by, for example, peak or mean value detection of imaging signals supplied from the imaging device 11 via the amplifier 12. The detection circuit 15 detects the level of the imaging signals with addition of so-called weighting, and with the imaging signals of the entire image or at the middle of the image as the object of detection. The output of the detection circuit 15 is supplied to a differential amplifier 16.

The differential amplifier 16 compares the output level of the imaging device 11 detected by the detection circuit 15 with a reference voltage supplied from a reference voltage generator 17 to supply a difference as a shutter control voltage to the shutter speed control circuit 18.

The shutter speed control circuit 18 transmits reset pulses SUB to the imaging device 11 via a driver circuit 19 based on the shutter control voltage from the differential amplifier 16 to control the charge accumulation time of the imaging device 11 so that the shutter control voltage from the differential amplifier 16 will be zero, as described previously.

The construction of the shutter speed control circuit 18 will now be explained.

Referring to Figure 2, the shutter speed control circuit 18 comprises a sawtooth (serrated) wave generator 21, for generating sawtooth signals timed to the image read-out pulse supplied via a terminal 2, a comparator 22 for comparing these sawtooth signals with shutter control voltage, and AND gate 23 for gating a reset pulse RP supplied via a terminal 4 based on the output from the comparator 22, an AND gate 24 for gating the negative logic of the vertical blanking signal V_{BLK} supplied via a terminal 5 based on the output from the comparator 22, and an OR gate 25 for taking an OR of the output of the AND gate 23 and the output of the AND gate 24. The output of the OR gate 25 is derived at a terminal 6 as the reset pulse SUB for the imaging device 11. The terminals 2 to 6 correspond to terminals 2 to 6 shown in Figure 1.

The operation of the shutter speed control circuit 18 is as follows.

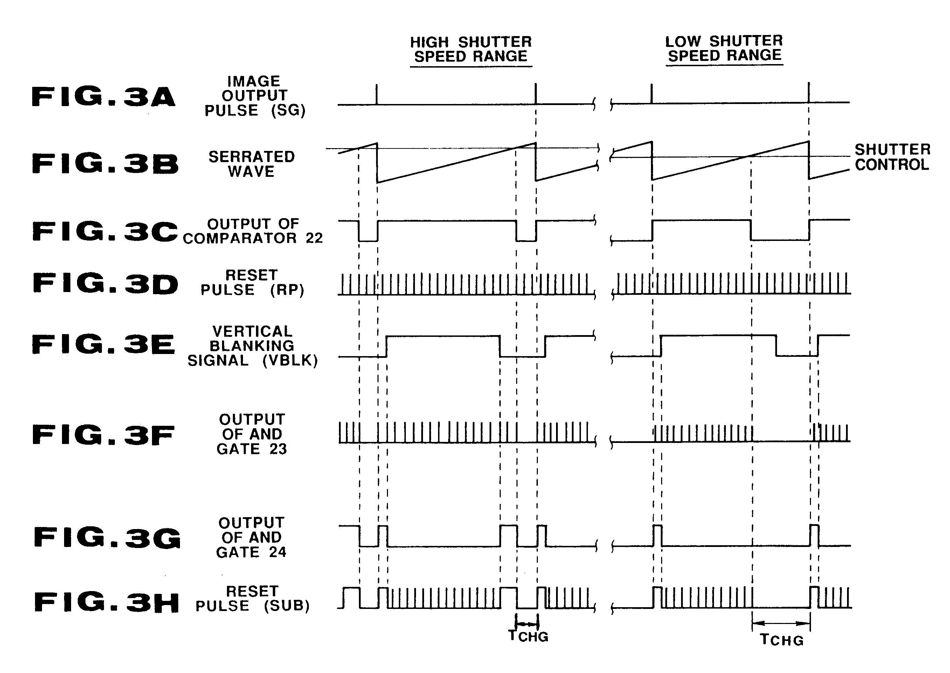

Referring to Figure 3B, the output of the sawtooth signal generator 21 is the sawtooth signal timed to the image read-out pulse SG for the imaging device 11 shown in Figure 1. The output of the comparator 22 goes high when the level of the sawtooth signal is lower than the shutter controlling voltage, as shown in Figure 3C. Thus the width of the H level of the output from the comparator 22 is controlled continuously, that is, in an analogue fashion, by the shutter control voltage, such that the width becomes wider when the object is lighter, and the shutter control voltage becomes higher.

Referring to Figure 3D, the reset pulse RP supplied via the terminal 4 is timed to the horizontal synchronizing signal, and goes high during the horizontal blanking period so as not to affect the currently read out imaging signal, as explained previously. The AND gate 23 allows the reset pulse RP to pass therethrough when the output of the comparator 22 is at a high level to output a signal shown at F in Figure 3. The AND gate 24 allows the negative logic of the vertical blanking signal V_{BLK}, shown at E in Figure 3, supplied via the terminal 5, to pass therethrough, when the output of the comparator 22 is at a high level, to output a signal shown at G in Figure 3. Thus the OR gate 25 outputs the reset pulse RP as the reset pulse SUB, as shown at H in Figure 3, during the period when the output of the comparator 22 is at high level, as long as the shutter control voltage is low, and the high-level period of the output of the comparator 22 is shorter than the high-level period of the vertical blanking period V_{BLK}, that is during the so-called imaging period. This state is referred to hereinafter as the low shutter speed range. Thus, for the low shutter speed range, the OR gate 25 outputs the reset pulse SUB controlled with the 1H period as a unit. On the other hand, the OR gate 25 outputs the reset pulse RP during the imaging period when the shutter control voltage is high, and the high-level period of the output of the comparator 22 is longer that the imaging period, as shown at H in Figure 3. This state is referred to hereinafter as the high shutter speed range. During the vertical blanking period, the OR gate 25 outputs the high-level reset pulse SUB during the period when the output of the comparator 22 is at a high level. Thus the OR gate 25 outputs continuously the controlled reset pulse SUB for the high shutter speed range.

Thus, in the low shutter speed range when the object is dark and the output level of the solid-state imaging device 11 is detected to be low at the detection circuit 15, the shutter speed controlling circuit 18 transmits the reset pulses SUB, which are controlled during the imaging period with the 1H period as a unit of the basis of the output level of the imaging device 11, to the substrate of the imaging device 11 via the driver circuit 19, for controlling the charge accumulating time T_{CHG}, which is the period since the supply of the last reset pulse SUB until supply of the image read-out pulse SG, with the 1H period as a unit, as shown in Figure 3F. On the other hand, in the high shutter speed range in which the object is light and the output level of the imaging device 11 is detected to be high at the detection circuit 15, the shutter speed control circuit 18 supplies the reset pulses SUB, which are continuously controlled on the basis of the output level of the imaging device 11 during the vertical blanking period, to the substrate of the imaging device 11 via the driver 19, for continuously controlling the charge accumulation time T_{CHG}, which is the period since the supply of the last reset pulse SUB until the supply of the image read-out pulse SG.

In this manner, the imaging signals from the imaging device 11 controlled as to the charge accumulating time, that is the imaging signals automatically controlled as to light exposure as a function of lightness of the object, are converted into video signals conforming to the NTSC or PAL system, before being outputted at the terminal 1. Meanwhile, the rise time of the sawtooth signal may be changed on a field-by-field basis, so that the charge accumulation time will be equal from field to field, thereby preventing flicker in the high shutter speed range.

The above described video camera includes the imaging device 11, the charge accumulating time of which can be controlled by reset pulses SUB supplied thereto, the detection circuit 15 for detecting the output level of the imaging device 11, and the shutter speed controlling circuit 18 for controlling the charge accumulating time in the imaging device 11 with the 1H period as a unit in the low shutter speed range in which the object is dark and the output level of the imaging device 11 is detected to be low in the detection circuit 15. The video camera controls the charge accumulating time continuously in the imaging device 11 in the high shutter speed range in which the last reset pulse SUB is situated in the vertical blanking period, that is when the object is light and the output level of the imaging device 11 is detected to be high in the detection circuit 15, for finely controlling the charge accumulation time continuously in the high speed shutter range in which 1H based control of the charge accumulating time is not practicable. This results in effects equivalent to those of opening and closing an iris. In other words, the function of automatic light exposure adjustment may be realized using an inexpensive manual iris lens, which cable connection between the main body of the video camera and the lens system can be eliminated, resulting in a reduced size of the main body of the video camera. Since the optimum light exposure can be preset in the main body of the video camera, readjustment need not be performed each time the lens is interchanged.

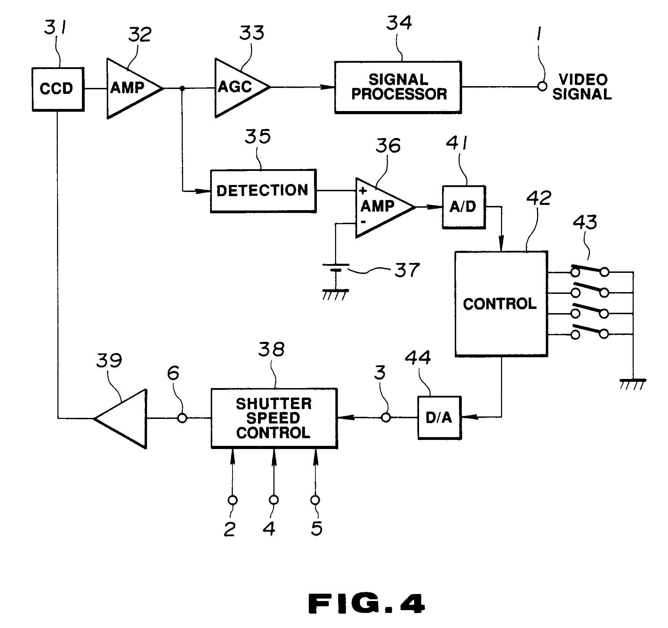

A second embodiment of the solid-state imaging apparatus of the present invention will now be explained by referring to Figure 4.

The present video camera, provided with the above-described function of automatic light exposure adjustment, is additionally so designed as to select desired fixed shutter speeds, such as 1/60, 1/100, 1/250 or 1/500 second.

Turning to Figure 4, the present video camera includes a solid-state imaging device 31, the charge time of which may be controlled, a signal processing circuit 34 for converting the imaging signals from the imaging device 31 into video signals conforming to, for example, the NTSC system or PAL system, a detection circuit 35 for detecting the output level of the imaging device 31, and a shutter speed controlling circuit 38 for controlling the charge accumulating time of the imaging device 31 based on the output of the detection circuit 35. The video camera also includes a control circuit 42 for controlling the shutter speed controlling circuit 38 based on data supplied from a mode switch 43 for setting the fixed shutter speed or the like for enabling the fixed shutter speeds to be selected as desired.

A CCD image sensor, the charge accumulating time of which can be controlled by the reset pulse SUB supplied thereto, is used as the imaging device 31, similarly to the imaging device 11 of Figure 1. The imaging signals from the imaging device 31 are amplified by an amplifier 32 before being supplied to an AGC circuit 33. The imaging signals from the AGC circuit 33 are supplied to the signal processing circuit 34 where they are converted into video signals conforming to, for example, the NTSC system or to the PAL system, before being outputted at the output terminal 1.

Similarly to the detection circuit 15, the detection circuit 35 detects the output level of the imaging device 31. The output of the detection circuit 35 is supplied to a differential amplifier 36.

The differential amplifier 36 compares the output level of the imaging device 31, detected by the detection circuit 35, with the reference voltage supplied from a reference voltage generator 37, and transmits a difference, as a shutter controlling voltage, to an A/D converter 41. The difference converted into digital data is supplied as a shutter controlling voltage data to the control circuit 42.

The control circuit 42 comprises, for example, a microcomputer, and transmits the shutter controlling voltage data to a D/A converter 44 on the basis of the shutter controlling voltage data from A/D converter 41 and data from the mode switch 43. More specifically, if the data from the mode switch 43 indicate an automatic light exposure adjustment mode, the control circuit 42 directly transmits the shutter controlling voltage data from the A/D converter 41 to the D/A converter 44. If the data. from the mode switch 43 indicate data indicating the shutter speed of 1/100 s, the control circuit 42 transmits shutter control voltage data corresponding to the shutter speed of 1/100 s to the D/A converter 44.

The data from the D/A converter 44 are converted by the D/A converter 44 into analogue signals which are supplied as a shutter control voltage to the shutter speed controlling circuit 38.

Similarly to the shutter speed control circuit 18 of Figure 1, the shutter speed control circuit 38 transmits reset pulses to the imaging device 31 via a driver circuit 39 based on the shutter control voltage from the D/A converter 44 to control the charge accumulation time in the imaging device 31, as described previously. The construction of the shutter speed controlling circuit 38 shown in Figure 2 is similar to that shown in Figure 1.

With the automatic light exposure adjustment mode, for example, the difference of the output level of the imaging device 31 from the reference voltage from the differential amplifier 36 is supplied as a shutter controlling voltage to the shutter speed control circuit 38 via the A/D converter 41, the control circuit 42 and the D/A converter 44. In the low shutter speed range in which the object is dark and the output level of the imaging device 31 is detected to be low in the detection circuit 35, the shutter speed controlling circuit 38 transmits the reset pulses SUB, controlled on the 1H basis in accordance with the output level of the imaging device 31 during the imaging period, to the substrate of the imaging device 31 via the driver circuit 39, thereby controlling the charge accumulation time in the imaging device 31 on the 1H basis. In the high shutter speed range in which the object is light and the output level of the imaging device 31 is detected to be high in the detection circuit 35, the shutter speed control circuit 38 transmits the reset pulses SUB, continuously controlled during the vertical blanking period on the basis of the output level of the imaging device 31, to the substrate of the imaging device 31 via the driver circuit 39, thereby continuously controlling the charge accumulation time of the imaging device 31.

In the fixed shutter speed mode, the shutter control voltage data from the control circuit 42, corresponding to the shutter speed of, for example, 1/100 s, are converted by the D/A converter 44 into the shutter speed control circuit 38. The shutter speed control circuit 38 transmits the reset pulse SUB, which will give the imaging device 31 via the driver circuit 39.

In this manner, the imaging signals from the imaging device 31, controlled as to the charge accumulating time, that is, the imaging signals automatically adjusted for light exposure in accordance with brightness of the object, or the imaging signals having the charge accumulation time fixed at the desired shutter speed, are converted into video signals conforming to the NTSC or PAL system, as shown in Figure 4, before being outputted at the terminal 1.

With this video camera, not only the function of automatic light exposure adjustment, as realized with the video camera of the preceding embodiment, is similarly realized, but desired fixed shutter speeds, such as 1/60, 1/100, 1/250 or 1/500 s, can be freely selected.

## Claims

1. An imaging apparatus having an imaging device (11) for accumulating charge, which accumulated charge is discharged in response to discharge pulses, and a shutter speed control circuit (18) for controlling a shutter speed of said imaging device (11), said shutter speed control circuit (18) comprising:
means (18) for generating a timing pulse by comparing a voltage level dependent on an output image signal of said imaging device (11) with a sawtooth pulse generated in response to a vertical scanning timing signal, characterised by:
means (23, 24, 25) for generating discharge pulses in response to reset pulses associated with horizontal scanning timing signals, a vertical blanking pulse and said timing pulse, so that discharge pulse timings for said imaging device (11) are controlled by each reset pulse discretely up to a last reset pulse when said timing pulse ends outside a blanking period of said vertical blanking pulse, and are controlled in a continuous manner where said timing pulse extends within said blanking period of said vertical blanking pulse.

2. Apparatus according to claim 1 where said means (23, 24, 25) for generating a discharge pulses includes a first AND circuit (23) for deriving a logical AND of said timing pulse and said reset pulse, a second AND circuit (24) for deriving a logical AND of said timing pulse and said vertical blanking pulse, and an OR circuit (25) for deriving a logical OR of output signals of said first and second AND circuits (23, 24) so as to generate said discharge pulses.

## Patentansprüche

1. Bildaufnahmevorrichtung mit einer Bildaufnahmeeinrichtung (11) zur Ansammlung einer Ladung, wobei die angesammelte Ladung in Abhängigkeit von Entladungsimpulsen entladen wird, und einer Shutter-Geschwindigkeits-Steuerschaltung (18), um eine Shutter-Geschwindigkeit der Bildaufnahmeeinrichtung (11) zu steuern, wobei die Shutter-Geschwindigkeits-Steuerschaltung (18) umfaßt:
eine Einrichtung (18) zur Erzeugung eines Zeittaktimpulses durch Vergleichen eines Spannungspegels in Abhängigkeit von einem Ausgangsbildaufnahmesignal der Bildaufnahmeeinrichtung (11) mit einem Sägezahnimpuls, der in Abhängigkeit von einem vertikalen Abtastzeittaktsignal erzeugt wird, gekennzeichnet durch:
eine Einrichtung (23, 24, 25) zur Erzeugung von Entladungsimpulsen in Abhängigkeit von Reset-Impulsen, die mit horizontalen Abtastzeittaktsignalen, einem vertikalen Austastimpuls und dem Zeittaktimpuls verknüpft sind, so daß Entladungsimpulszeittakte für die Bildaufnahmeeinrichtung (11) durch jeden Reset-Impuls diskret bis zu einem letzten Reset-Impuls gesteuert werden, wenn dieser Zeittaktimpuls außerhalb einer Austastperiode des vertikalen Austastimpulses endet, und fortlaufend gesteuert werden, wo sich der Zeittaktimpuls innerhalb der Austastperiode des vertikalen Austastimpulses erstreckt.

2. Vorrichtung nach Anspruch 1, wobei die Einrichtung (23, 24, 25) zur Erzeugung von Entladungsimpulsen einer erste UND-Schaltung (23) aufweist, um ein logisches UND des Zeittaktimpulses und des Reset-Impulses herzuleiten, eine zweite UND-Schaltung (24), um ein logisches UND des Zeittaktimpulses und des vertikalen Austastimpulses herzuleiten, und eine ODER-Schaltung (25), um ein logisches ODER der Ausgangssignale der ersten und zweiten UND-Schaltung (23, 24) herzuleiten, um die genannten Entladungsimpulse zu erzeugen.

## Revendications

1. Dispositif de prise de vues ayant un dispositif de prise de vues (11) pour accumuler une charge, laquelle charge accumulée est déchargée en réponse aux impulsions de décharge, et un circuit de commande de vitesse d'obturateur (18) pour commander une vitesse d'obturateur dudit dispositif de prise de vues (11), ledit circuit de commande de vitesse d'obturateur (18) comprenant :
un dispositif (18) pour générer une impulsion de synchronisation en comparant un niveau de tension dépendant d'un signal d'image de sortie dudit dispositif de prise de vues (11) avec une impulsion en dents de scie générée en réponse à un signal de synchronisation de balayage vertical, caractérisé par :
un dispositif (23, 24, 25) pour générer des impulsions de décharge en réponse aux impulsions de réinitialisation associées aux signaux de synchronisation de balayage horizontal, une impulsion de suppression verticale et ladite impulsion de synchronisation, pour que des synchronisations d'impulsion de décharge pour ledit dispositif de prise de vues (11) soient commandées par chaque impulsion de réinitialisation de façon discrète jusqu'à une dernière impulsion de réinitialisation lorsque ladite impulsion de synchronisation se termine à l'extérieur d'une période de suppression de ladite impulsion de suppression verticale, et sont commandées de manière continue lorsque ladite impulsion de synchronisation s'étend dans ladite période de suppression de ladite impulsion de suppression verticale.

2. Dispositif selon la revendication 1 dans lequel ledit dispositif (23, 24, 25) pour générer des impulsions de décharge comprend un premier circuit ET (23) pour dériver un ET logique de ladite impulsion de synchronisation et de ladite impulsion de réinitialisation, un second circuit ET (24) pour dériver un ET logique de ladite impulsion de synchronisation et de ladite impulsion de suppression verticale, et un circuit OU (25) pour dériver un OU logique des signaux de sortie desdits premier et second circuit ET (23, 24) afin de générer lesdites impulsions de décharge.
